(19) Europäisches Patentamt
European Patent Office
Office européen des brevets

(11) Veröffentlichungsnummer: **0 224 805 B1**

(12) # EUROPÄISCHE PATENTSCHRIFT

(45) Veröffentlichungstag der Patentschrift: **14.03.90**

(21) Anmeldenummer: **86116070.3**

(22) Anmeldetag: **20.11.86**

(51) Int. Cl.⁴: **C08L 83/10**, C08L 35/06 // (C08L83/10, 35:06, 51:00),(C08L35/06, 83:10, 51:00)

(54) **Thermoplastische Polycarbonatformmassen.**

(30) Priorität: **03.12.85 DE 3542678**

(43) Veröffentlichungstag der Anmeldung: **10.06.87 Patentblatt 87/24**

(45) Bekanntmachung des Hinweises auf die Patenterteilung: **14.03.90 Patentblatt 90/11**

(84) Benannte Vertragsstaaten: **DE ES FR GB IT NL**

(56) Entgegenhaltungen: **EP-A- 0 135 794** **US-A- 4 393 169**

**Die Akte enthält technische Angaben, die nach dem Eingang der Anmeldung eingereicht wurden und die nicht in dieser Patentschrift enthalten sind.**

(73) Patentinhaber: **BAYER AG, D-5090 Leverkusen 1 Bayerwerk(DE)**

(72) Erfinder: **Kress, Hans-Jürgen, Dr., Scheiblerstrasse 111, D-4150 Krefeld(DE)**
Erfinder: **Paul, Winfried, Dr., Bethelstrasse 22, D-4150 Krefeld(DE)**
Erfinder: **Peters, Horst, Dr., Winterberg 25, D-5090 Leverkusen 3(DE)**
Erfinder: **Lindner, Christian, Dr., Riehler Strasse 200, D-5000 Köln 60(DE)**
Erfinder: **Buekers, Josef, Kneinstrasse 58a, D-4150 Krefeld(DE)**

**EP 0 224 805 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Gegenstand der vorliegenden Erfindung sind thermoplastische Formmassen, enthaltend

A. 50 bis 80 Gew.-Tl., bezogen auf 100 Gew.-Teile A + B, Polydiorganosiloxan-Polycarbonat-Blockcopolymer auf Basis der Diphenole der Formeln (I) und (Ia), mit mittleren Molekulargewicht $\overline{M}_w$ von 10 000 - 200 000 und mit einem Gehalt an aromatischen Carbonatstruktureinheiten zwischen 75 Gew.-% und 99 Gew.-%, vorzugsweise zwischen 85 Gew.-% und 98 Gew.-%, und einem Gehalt an Diorganosiloxy-Einheiten zwischen 1 Gew.-% und 25 Gew.-%, vorzugsweise zwischen 2 Gew.-% und 15 Gew.-%, wobei die Blockcopolymeren, ausgehend von α,ω-Bishydroxyaryloxyendgruppen-haltigen Polydiorganosiloxanen (Ia), mit einem Polymerisationsgrad $P_n$ von 5 bis 100, vorzugsweise 20 bis 80 hergestellt werden,

B. 20 bis 50 Gew.-Tl., bezogen auf 100 Gew.-Tl. A + B, eines statistisch aufgebauten Copolymerisates aus 95 - 70 Gew.-%, vorzugsweise 90 bis 75 Gew.-% Styrol, α-Methylstyrol oder kernsubstituierten Styrolen oder Mischungen der genannten Vinylaromaten und 5 - 30 Gew.-%, vorzugsweise 10 - 25 Gew.-% Maleinsäureanhydrid, und

C. 0,5 bis 4,0 Gew.-Tl., vorzugsweise 1,0 bis 3,0 Gew.-Tl., bezogen auf 100 gew.-Tl. A + B, eines oder mehrerer Pfropfpolymerisate aus

C.1 5 bis 90 Gew.-Tl., vorzugsweise 30 - 80 Gew.-Tl. einer Mischung aus

C.1.1 50 bis 95 Gew.-% Styrol, α-Methylstyrol, kernsubstituiertem Styrol, Methylmethacrylat oder Mischungen daraus und

C.1.2 50 bis 5 Gew.-% (Meth)Acrylnitril, Methylmethacrylat, Maleinsäureanhydrid, N-substituiertem Maleinimid oder Mischungen daraus, auf

C.2 95 bis 10 Gew.-Tl., vorzugsweise 70 - 20 Gew.-Tl. eines Kautschuks mit einer Glastemperatur $\leq$ 10°C,

sowie gegebenenfalls wirksame Mengen an Flammschutzmitteln, Fließmitteln, Stabilisatoren, Pigmenten, Entformungsmitteln und/oder Antistatika.

Die Komponente A. kann euch eine Mischung aus Polydiorganosiloxan-Polycarbonat-Blockcopolymeren mit an sich bekannten siloxanfreien, thermoplastischen Polycarbonaten sein, wobei der Gesamtgehalt an Diorganosiloxy-Einheiten in dieser Polycarbonatmischung wiederum zwischen 1,0 Gew.-% und 25 Gew.-%, vorzugsweise zwischen 2 Gew.-% und 15 Gew.-% beträgt.

Aus der EP-A 135 794 sind Abmischungen von Polydiorganosiloxan-Polycarbonat-Blockcopolymeren, Pfropfpolymerisaten und kautschukfreien thermoplastischen Vinylpolymerisaten bekannt. Als Vinylpolymerisate sind auch Copolymerisate von Styrol mit Maleinsäureanhydrid möglich (Seite 10 der EP-A) aber nicht differenziert offenbart. Die Mengenverhältnisse der Komponenten betragen 20 bis 80 Gew.-Teile Polydiorganosiloxan - Polycarbonat-Blockcopolymer, 5 bis 60 Gew.-Teile kautschukfreie thermoplastische Vinylpolymerisate und 70 bis 5 Gew.-Teile Pfropfpolymerisate.

Es hat sich jedoch nun gezeigt, daß speziell für Polydiorganosiloxan-Polycarbonat-Blockcopolymer-Mischungen mit Styrol-Maleinsäureanhydrid-Copolymeren schon bei Zusatz von sehr kleinen Mengen Pfropfkautschuk, auch bei hohem Copolymer/Blockcopolymer-Verhältnis, Produkte mit sehr guten (Kerb)schlagzähigkeiten resultieren. Zusätzlich besitzen diese Produkte, unabhängig vom Copolymer/Blockcopolymer-Verhältnis, eine sehr hohe Wärmeformbeständigkeit und gute Verarbeitbarkeit.

Die erfindungsgemäß einzusetzenden Polydiorganosiloxan-Polycarbonat-Blockcopolymeren sind entweder literaturbekannt (siehe beispielsweise US-A 3 189 662, US-A 3 419 634, DE-A 3 334 782 bzw. EP-A 0 122 535 und EP-A 0 135 795 oder sofern hergestellt unter Mitverwendung von speziellen Kettenabbrechern, in der DE-A 3 506 472 = EP-A 193 757 beschrieben.

Von den literaturbekannten Polydiorganosiloxan-Polycarbonat-Blockcopolymeren werden in der einschlägigen Literatur ihre verbesserten mechanischen Eigenschaften bei tiefen Temperaturen beschrieben (z.B. B. M. Beach, R.P. Kambour und A.R. Schultz, J. Polym. Sci., Polym. Lett. Ed. 12, 247 (1974)).

Die erfindungsgemäß einzusetzenden Blockcopolymeren gemäß Komponente A sind solche auf Basis der Diphenole der Formel (I)

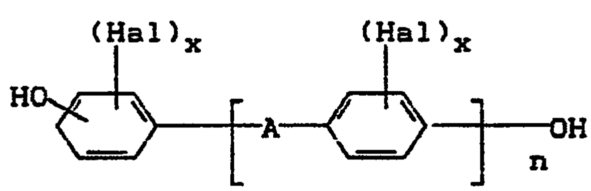 (I),

worin "A" eine Einfachbindung, ein $C_1$-$C_5$-Alkylen, ein $C_2$-$C_5$-Alkyliden, ein $C_5$-$C_6$-Cycloalkyliden, -S- oder -$SO_2$-, "Hal" Chlor oder Brom, "x" 0, 1 oder 2 und "n" 1 oder null sind und der Formel (Ia)

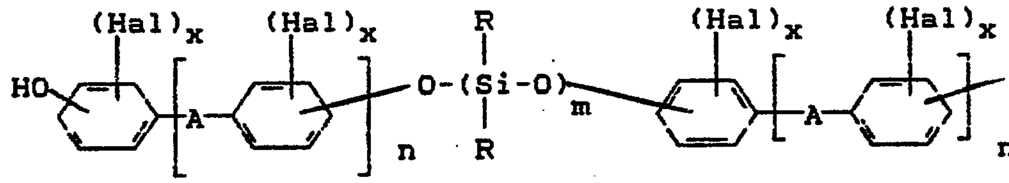

(Ia)

worin "A", "Hal", "x" und "n" die für Formel (I) genannte Bedeutung haben, und die R's gleich oder verschieden sind und ein lineares $C_1$-$C_{20}$-Alkyl, verzweigtes $C_3$-$C_{20}$-Alkyl oder $C_6$-$C_{20}$-Aryl, vorzugsweise $CH_3$, sind und "m" eine ganze Zahl zwischen 5 und 100, vorzugsweise zwischen 20 und 80, ist und wobei der Gewichtsanteil an Diphenolen der Formel (Ia) in den Copolycarbonaten jeweils so bemessen ist, daß der Gehalt an Diorganosiloxy-Einheiten

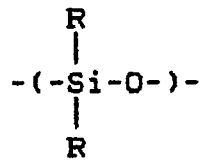

im Copolycarbonat zwischen 1 Gew.-% und 25 Gew.-%, vorzugsweise zwischen 2 Gew.-% und 15 Gew.-% beträgt.

Die Diphenole der Formel (I) sind entweder literaturbekannt oder nach literaturbekannten Verfahren herstellbar: Polydiorganosiloxane mit Hydroxy-aryloxy-Endgruppen gemäß Formel (Ia) sind ebenfalls bekannt (s. beispielsweise US-A 3 419 634) bzw. nach literaturbekannten Verfahren herstellbar.

Die Herstellung der erfindungsgemäß geeigneten Polycarbonate gemäß Komponente A ist literaturbekannt und kann beispielsweise mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (s. beispielsweise DE-A 3 334 782).

Geeignete Kettenabbrecher sind beispielsweise Phenol, p-Chlorphenol, p-tert.-Butylphenol und 2,4,6-Tribromphenol.

Darüber hinaus ist in der DE-A 3 506 472 die Herstellung von Blockcopolymeren mit Monoalkylphenolen oder Dialkylphenolen mit insgesamt 8 bis 20 C-Atomen in den Alkylsubstituenten beschrieben, wobei beispielsweise als Kettenabbrechern p-Isooctylphenol, p-Nonylphenol, 3,5-Di-tert.-butyl-phenol, p-tert.-Octyl-phenol, p-Dodecyl-phenol, 2-(3,5-Dimethyl-heptyl)-phenol und 4-(3,5-Dimethyl-heptyl)-phenol genannt sind.

Die Menge an einzusetzenden Kettenabbrecher beträgt im allgemeinen zwischen 0,5 Mol-% und 10,0 Mol-%, bezogen auf die Summe der jeweils eingesetzten Diphenole (I) + (Ia).

Die erfindungsgemäß geeigneten Polycarbonate gemäß Komponente A haben Gewichtsmittelmolekulargewichte ($\overline{M}_W$, gemessen beispielsweise durch Ultrazentrifugation oder Streulichtmessung) von 10 000 bis 200 000, vorzugsweise von 20 000 bis 80 000.

Geeignete Diphenole der Formel (I) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan und 2,2-Bis-(3,5-dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Geeignete Diphenole der Formel (Ia) sind solche, in denen R Methyl, Ethyl, Propyl, n-Butyl, tert.-Butyl und Phenyl ist.

Bevorzugte Diphenole der Formel (Ia) sind die der Formel (Ib)

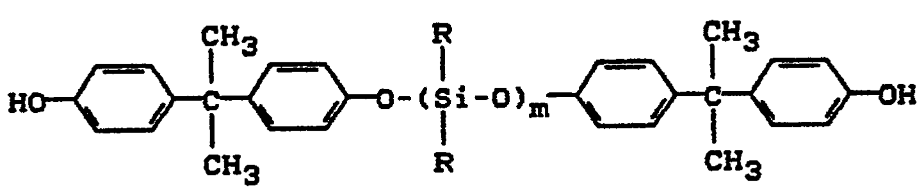

(Ib)

worin die R's gleich sind und die vorstehend genannte Bedeutung haben, also Methyl etc. und Phenyl bedeuten und "m" wiederum eine ganze Zahl zwischen 5 und 100, vorzugsweise zwischen 20 und 80 ist.

Die Herstellung der Diphenole der Formel (Ia) kann beispielsweise aus den entsprechenden Bis-chlorverbindungen (II)

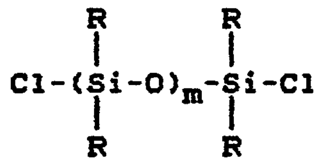

(II)

und den Diphenolen (I) beispielsweise gemäß US-A 3 419 634, Spalte 3 in Kombination mit US-A 3 182 662 erfolgen.

In den Bis-chlorverbindungen (II) haben R und "m" die Bedeutung wie in den Diphenolen (Ia) bzw. (Ib).

Die erfindungsgemäß geeigneten Polycarbonate gemäß Komponente A können in bekannter Weise verzweigt sein, und zwar vorzugsweise durch den Einbau von 0,05 bis 2,0 Mol-%, bezogen auf die Summe der eingesetzten Diphenole, an drei- odermehr als dreifunktionellen Verbindungen, beispielsweise solchen mit drei oder mehr als drei phenolischen OH-Gruppen.

Die erfindungsgemäß geeigneten Styrol-Maleinsäureanhydrid-Copolymeren gemäß Komponente B sind statistisch aufgebaut. Solche statistisch aufgebauten Copolymerisate können bevorzugt durch eine kontinuierliche Masse- oder Lösungspolymerisation bei unvollständigen Umsätzen aus den entsprechenden Monomeren hergestellt werden.

Anstelle von Styrol können die Polymeren auch kernsubstituierte Styrole wie p-Methylstyrol, Vinyltoluol, 2,4-Dimethylstyrol und/oder andere substituierte Styrole wie α-Methylstyrol enthalten.

Die Molekulargewichte der erfindungsgemäß geeigneten, statistisch aufgebauten Styrol-Maleinsäureanhydrid-Copolymeren gemäß Komponente B können über einen weiten Bereich variieren. Bevorzugt ist für diese Produkte eine Grenzviskositätszahl [η] von 0,3-0,9 (gemessen in Dimethylformamid bei 25°C; siehe hierzu Hoffmann, Krömer, Kuhn, Polymeranalytik I, Stuttgart 1977, Seite 316 ff.).

Zur Herstellung der Pfropfpolymerisate gemäß Komponente C geeignete Kautschuke sind insbesondere Polybutadien, Butadien/Styrol-Copolymerisate mit bis zu 30 Gew.-%, bezogen auf Kautschukgewicht, eines niederen Alkylesters von Acryl- oder Methacrylsäure (beispielsweise Methylmethacrylat, Ethylacrylat, Methylacrylat oder Ethylmethacrylat). Weitere geeignete Kautschuke sind beispielsweise Polyisopren oder Polychloropren. Geeignet sind weiterhin Alkylacrylatkautschuke auf der Basis von $C_1$-$C_8$-Alkylacrylaten, insbesondere Ethyl-, Butyl-, Ethylhexylacrylat. Diese Alkylacrylatkautschuke können gegebenenfalls bis zu 30 Gew.-%, bezogen auf Kautschukgewicht, Monomere wie Vinylacetat, Acrylnitril, Styrol, Methylmethacrylat und/oder Vinylether copolymerisiert enthalten. Diese Alkylacrylatkautschuke können weiterhin kleinere Mengen, vorzugsweise bis zu 5 Gew.-%, bezogen auf Kautschukgewicht, vernetzend wirkender ethylenisch ungesättigter Monomere enthalten. Solche Vernetzer sind zum Beispiel Alkylendiol-di(meth)-acrylate, Polyesterdi-(meth)-acrylate, Divinylbenzol, Trivinylbenzol, Triallylcyanurat, Allyl-(meth)-acrylat, Butadien oder Isopren. Solche Alkylacrylate sind bekannt. Acrylatkautschuke als Pfropfgrundlage können auch Produkte sein, die einen vernetzten Dienkautschuk aus einem oder mehreren konjugierten Dienen, wie Polybutadien oder ein Copolymerisat eines konjugierten Diens mit einem ethylenisch ungesättigten Monomer, wie Styrol und/oder Acrylnitril, als Kern enthalten. Andere geeignete Kautschuke sind beispielsweise EPDM-Kautschuke, also Kautschuke aus Ethylen, Propylen und einem unkonjugierten Dienmonomer. Bevorzugte Kautschuke zur Herstellung der Pfropfpolymerisate C sind Dien- und Alkylacrylatkautschuke.

Die Kautschuke liegen im Pfropfpolymerisat C in Form wenigstens partiell vernetzter Teilchen einer mittleren Teilchengröße von 0,09 bis 5 µm, insbesondere 0,1 bis 1 µm vor. Die Pfropfpolymerisate C werden durch radikalische Pfropfpolymerisation der eingangs definierten Monomerengemische aus C.1.1 und C.1.2 in Gegenwart der zu pfropfenden Kautschuke C.2 hergestellt und sind durchweg bekannt.

Bevorzugte Herstellungsverfahren für die Pfropfpolymerisate C sind Emulsions-, Lösungs-, Masse- oder Suspensionspolymerisation. Besonders bevorzugte Pfropfpolymerisate C sind die sogenannten ABS-Polymerisate. Als kernsubstituierte Styrole seien Halogenstyrole und p-Methylstyrol erwähnt.

Die erfindungsgemäßen thermoplastischen Formmassen können weitere für Polycarbonate, Styrol-Maleinsäureanhydrid-Copolymere oder für Pfropfpolymerisate bekannte Zusätze wie Flammschutzmittel, Fließmittel, Stabilisatoren, Pigmente, Entformungsmittel und/oder Antistatika enthalten.

Die erfindungsgemäßen Formmassen, enthaltend die Komponenten A, B, C und gegebenenfalls weitere bekannte Zusätze wie Flammschutzmittel, Fließmittel, Stabilisatoren, Pigmente, Entformungsmittel und/oder Antistatika werden hergestellt, indem man die jeweiligen Bestandteile in bekannter Weise vermischt und bei Temperaturen von 220 - 330°C in üblichen Aggregaten wie Innenknetern oder Ein- oder Zweischneckenextrudern schmelzcompoundiert oder schmelzextrudiert oder indem man die Lösungen der jeweiligen Komponenten in geeigneten organischen Lösungsmitteln, beispielsweise in Chlorbenzol, mischt und die Lösungsgemische in üblichen Aggregaten, beispielsweise in Eindampfextrudern, eindampft.

Gegenstand der vorliegenden Erfindung ist somit auch ein Verfahren zur Herstellung von thermoplastischen Formmassen, enthaltend die Komponenten A, B, C und gegebenenfalls Flammschutzmittel,

Fließmittel, Stabilisatoren, Pigmente Entformungsmittel und/oder Antistatika, das dadurch gekennzeichnet ist, daß man die Komponenten A, B und C sowie gegebenenfalls Flammschutzmittel, Fließmittel, Stabilisatoren, Pigmente, Entformungsmittel und/oder Antistatika nach erfolgter Vermischung bei Temperaturen von 220-330°C in gebräuchlichen Aggregaten schmelzcompoundiert oder schmelzextrudiert, oder daß man die Lösungen dieser Komponenten in geeigneten organischen Lösungsmitteln nach erfolgter Vermischung in gebräuchlichen Aggregaten eindampft.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art (z.B. für Haushaltsgeräte wie Kaffeemaschinen oder Mixer) oder Abdeckplatten für den Bausektor und Teile für den Kfz-Sektor. Sie werden außerdem auf dem Gebiet der Elektrotechnik eingesetzt, weil sie sehr gute elektrische Eigenschaften besitzen.

Eine weitere Form der Verarbeitung ist die Herstellung von Formkörpern durch Tiefziehen oder Warmverformen zuvor durch Extrusion hergestellter Platten oder Folien.

Beispiele

Eingesetzte Legierungskomponenten

A. Ein Copolycarbonat auf Basis von Bisphenol A und 5 Gew.-% Polydimethylsiloxan der Blocklänge ($\overline{P}_n$) 40, mit einer relativen Lösungsviskosität von 1,31, gemessen in $CH_2Cl_2$ bei 25°C und einer Konzentration von 0,5 Gew.-%, hergestellt undter Verwendung von Phenol als Kettenabbrecher, gemäß DE-A 3 334 782.

C. SAN-Pfropfpolymerisat von 50 % Styrol/Acrylnitril-Gemisch (im Gew.-Verhältnis von 72:28) auf 50 % teilchenförmiges Polybutadien mit einer mittleren Teilchengröße ($d_{50}$) von 0,4 µm, erhalten durch Emulsionspolymerisation.

Herstellung der Copolymerharze B

In einem ummantelten Gefäß, das mit Innenthermometer, Rührer, Ein- und Auslaß versehen ist, werden 750 Tl. eines Gemisches mit einer Zusammensetzung gemäß Tabelle 1 vorgelegt und auf 130°C erwärmt. Dann wird ein Monomerstrom von 110 Tl. derselben Zusammensetzung so zudosiert und gleichzeitig dieselbe Menge an Polymerlösung dem Gefäß entnommen, daß der Füllstand im Gefäß gehalten wird. Dem Monomerstrom werden kontinuierlich ca. 0,05 Tl./h tert.-Butylperpivalat (75 %ig in Dibutylphthalat) zugefügt. Nach ca. 2 h hat sich ein konstanter Umsatz von ca. 40 % eingestellt. Die Polymerlösung wird mit 0,1 Gew.-% 2,6-Di-t-butyl-p-kresol versetzt und anschließend auf einem Ausdampfextruder von Monomeren und flüchtigen Bestandteilen befreit.

Die Compoundierung der Komponenten A, B und C erfolgte auf einem 3-l-Innenkneter bei Temperaturen zwischen 200 und 220°C.

Die Herstellung der Formkörper erfolgte auf einer Spritzgießmaschine bei 260°C.

Die Bestimmung der Wärmeformbeständigkeit nach Vicat (Methode B) erfolgte gemäß DIN 53 460.

Die Bestimmung der Kerbschlagzähigkeit nach Izod erfolgte an Stäben der Abmessung 2,5 x 1/2 x 1/8" (63,5 x 12,7 x 3,2 mm) gemäß ASTM-D-256 bzw. in Anlehnung an DIN 53 453 / ISO R 179 an Stäben der Abmessung 50 x 6 x 4 mm, wobei für die Kerbschlagzähigkeit die Stäbe mit einer V-förmigen Kerbe der Kerbtiefe 2,7 mm versehen wurden.

Aus Tabelle 2 könen die genauen Zusammensetzungen der geprüften Formmassen sowie die erhaltenen Prüfdaten entnommen werden.

Teilchengröße bedeutet immer mittlerer Teilchendurchmesser $d_{50}$, ermittelt durch Ultrazentrifugenmessungen nach W. Scholtan et al., Kolloid-Z. u. Z. Polymere 250 (1972) 782 - 796.

Die Zugabe von kleinen Mengen Pfropfkautschuk erhöht zwar die Zähigkeit, wobei jedoch bei den erfindungsgemäßen Versuchen deutlich bessere Werte resultieren. Dadurch können Produkte mit verbesserter Fließfähigkeit (Verarbeitbarkeit) erzielt werden.

Wie die erfindungsgemäßen Versuche zeigen, wird die außerordentlich hohe Zähigkeit im wesentlichen unter Beibehaltung einer hohen Wärmeformbeständigkeit erzielt.

Tabelle 1: Zusammensetzung der Einsatzmonomeren und der Copolymerisate B

| | Einsatzmonomere (Gew.-%) | | Copolymerisat (Gew.-%) | | Grenzviskositätszahl des Copolymerisats |
|---|---|---|---|---|---|
| | Styrol | Maleinsäure-anhydrid | Styrol | Maleinsäure-anhydrid | |
| B1 | 93,8 | 6,2 | 84,5 | 15,5 | 0,514 |
| B2 | 93,2 | 6,8 | 83 | 17 | 0,518 |

Tabelle 2

| | | | | |
|---|---|---|---|---|
| A | (Gew.-Tl.) | 80 | 35* | 50 |
| B1 | (Gew.-Tl.) | 20 | 65 | 50 |
| B2 | (Gew.-Tl.) | | | |
| C | (Gew.-Tl.) | 3 | 3 | 3 |
| Kerbschlagzähigkeit (DIN), Raumtemperatur | (kJ/m$^2$) | 69 | 12,8 | 21,4 |
| Kerbschlagzähigkeit (Izod) Raumtemperatur | (kJ/m$^2$) | 1030 | | |
| Wärmeformbeständigkeit (Vicat b) | (C°) | 138 | 136 | 138 |

* Vergleichsbeispiel

**Patentansprüche**

1. Thermoplastische Formmassen, enthaltend
A. 50–80 Gew.-Tl., bezogen auf 100 Gew.-Teile A+B, Polydiorganosiloxan-Polycarbonat-Blockcopolymer, mit mittlerem Molekulargewicht $\overline{M}_w$ von 10 000–200 000 und mit einem Gehalt an aromatischen Carbonatstruktureinheiten zwischen 75 Gew.-% und 99 Gew.-% und einem Gehalt an Diorganosiloxy-Einheiten zwischen 25 Gew.-% und 1,0 Gew.-%, wobei die Blockcopolymeren, solche auf Basis der Diphenole der Formel (I)

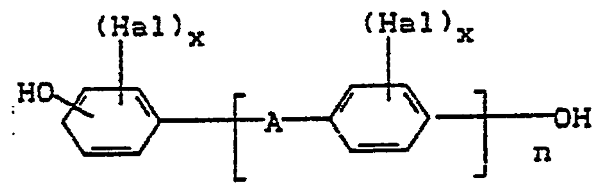 (I),

worin "A" eine Einfachbindung, ein $C_1$–$C_5$-Alkylen, ein $C_2$–$C_5$-Alkyliden, ein $C_5$–$C_6$-Cycloalkyliden, –S– oder –$SO_2$–, "Hal" Chlor oder Brom, "x" 0, 1 oder 2 und "n" 1 oder null sind, und der Formel (Ia) sind,

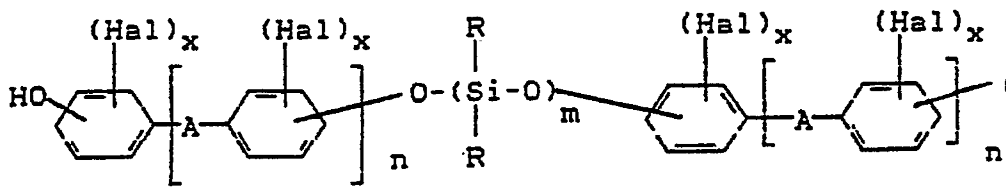 (Ia)

worin "A", "Hal", "x" und "n" die für Formel (I) genannte Bedeutung haben, und die R's gleich oder verschieden sind und ein lineares $C_1$–$C_{20}$-Alkyl, verzweigtes $C_3$–$C_{20}$-Alkyl oder $C_6$–$C_{20}$-Aryl, sind und "m" eine ganze Zahl zwischen 5 und 100 ist und wobei die Blockcopolymeren, ausgehend von den α,ω-Bishydroxyaryloxyendgruppen-haltigen Polydiorganosiloxanen (Ia), mit einem Polymerisationsgrad $P_n$ von 5–100 hergestellt werden,
B. 20–50 Gew.-Tl., bezogen auf 100 Gew.-Teile A+B, eines statistisch aufgebauten Copolymerisates aus 95–70 Gew.-% Styrol, α-Methylstyrol oder kernsubstituierten Styrolen oder Mischungen der genannten Vinylaromaten und 5–30 Gew.-% Maleinsäureanhydrid, und
C. 0,5–4,0 Gew.-Tl., bezogen auf 100 Gew.-Teile A+B, eines oder mehrerer Pfropfpolymerisate aus
C.1 5–90 Gew.-Tl. einer Mischung aus
C.1.1 50–95 Gew.-% Styrol, α-Methylstyrol, kernsubstituiertem Styrol, Methylmethacrylat oder Mischungen daraus und
C.1.2 50–5 Gew.-% (Meth)Acrylnitril, Methylmethacrylat, Maleinsäureanhydrid, N-substituiertem Maleinimid oder Mischungen daraus, auf
C.2 95–10 Gew.-Tl. eines Kautschuks mit einer Glastemperatur $\leq$ 10°C.

2. Formmassen gemäß Anspruch 1 enthaltend als Komponente (A) eine Mischung von Polydiorganosiloxan-Polycarbonat-Blockcopolymeren mit an sich bekannten siloxanfreien thermoplastischen Polycarbonaten, wobei der Gesamtgehalt an Diorganosiloxy-Einheiten in dieser Polycarbonatmischung wiederum zwischen 1.0 Gew.-% und 25 Gew.-% beträgt.

3. Formmassen gemäß Ansprüchen 1 und 2, wobei die Komponente B aus 90–75 Gew.-% Styrol, α-Me-

thylstyrol oder kernsubstituierten Styrolen oder Mischungen der genannten Vinylaromaten und 10–25 Gew.-% Maleinsäureanhydrid aufgebaut ist.

4. Formmassen gemäß Ansprüche 1 bis 3, enthaltend die Komponente C in Mengen von 1,0 bis 3,0 Gew.-Tl., bezogen auf 100 Gew.-Tl. A+B.

5. Formmassen gemäß Ansprüche 1 bis 4, wobei die Komponente C aus 30–80 Gew.-Tl. C.1 und 70–20 Gew.-Tl. C.2 aufgebaut ist.

6. Formmassen gemäß Ansprüche 1–5, enthaltend mindestens einen Zusatzstoff, ausgewählt aus der Gruppe der Flammschutzmittel, Fließmittel, Stabilisatoren, Pigmente, Entformungsmittel und Antistatika.

7. Verfahren zur Herstellung der Formmassen gemäß Ansprüche 1 bis 5, dadurch gekennzeichnet, daß man die Komponenten A, B und C in bekannter Weise vermischt und danach bei Temperaturen von 220°C–330°C in gebräuchlichen Aggregaten schmelzcompoundiert oder schmelzextrudiert.

8. Verfahren zur Herstellung der Formmassen gemäß Ansprüche 1 bis 5, dadurch gekennzeichnet, daß man Lösungen der Komponenten A, B und C in geeigneten organischen Lösungsmitteln mischt und danach die Lösungsgemische in gebräuchlichen Eindampfaggregaten eindampft.

9. Verfahren zur Herstellung der Formmassen des Anspruchs 6 gemäß den Ansprüchen 7 und 8, dadurch gekennzeichnet, daß man mindestens einen Zusatz ausgewählt aus der Gruppe der Flammschutzmittel, Fließmittel, Stabilisatoren, Pigmente, Entformungsmittel und Antistatika, einbezieht.

## Claims

1. Thermoplastic molding compounds containing

A. 50 to 80 parts by weight, based on 100 parts by weight A+B, polydiorganosiloxane/polycarbonate block copolymer having an average molecular weight $M_w$ of from 10,000 to 200,000 and a content of diorganosiloxy units of from 25% by weight to 1.0% by weight, the block copolymers being those based on diphenols corresponding to formula (I)

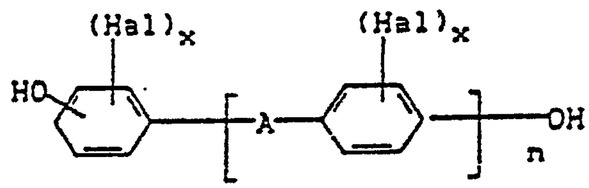

(I),

in which "A" is a single bond, a $C_{1-5}$ alkylene, a $C_{2-5}$ alkylidene, a $C_{5-6}$ cycloalkylidene, –S– or $-SO_2-$, "Hal" is chlorine or bromine, "x" is 0, 1 or 2 and "n" is 1 or 0, and to formula (Ia)

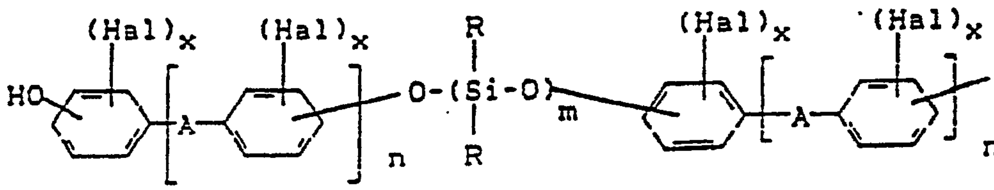

(Ia)

in which "A", "Hal", "x" and "n" are as defined for formula (I) and the R's may be the same or different and represent a linear $C_{1-20}$ alkyl, branched $C_{3-20}$ alkyl or $C_{6-20}$ aryl and "m" is an integer of from 5 to 100, and the block copolymers being produced from α,β-bis-hydroxyaryloxy-terminated polydiorganosiloxanes (Ia) having a degree of polymerization $P_n$ of from 5 to 100,

B. 20 to 50 parts by weight, based on 100 parts by weight A+B, of a statistical copolymer of 95 to 70% by weight styrene or mixtures of the above-mentioned aromatic vinyl compounds and 5 to 30% by weight maleic anhydride and

C. 0.5 to 4.0 parts by weight, based on 100 parts by weight of A+B, of one or more graft polymers of

C.1 5 to 90 parts by weight of a mixture of

C.1.1 50 to 95% by weight styrene, α-methyl styrene, nucleus-substituted styrene, methyl methacrylate or mixtures thereof and

C.1.2 50 to 5% by weight (meth)acrylonitrile, methyl methacrylate, maleic anhydride, N-substituted maleic imide or mixtures thereof on

C.2 95 to 10 parts by weight of a rubber having a glass temperature of $\leq$10°C.

2. Molding compounds as claimed in claim 1 containing as component (A) a mixture of polydiorganosiloxane/polycarbonate block copolymers with siloxane-free thermoplastic polycarbonates known per se, the total content of diorganosiloxy units in this polycarbonate mixture again being from 1.0 to 25% by weight.

3. Molding compounds as claimed in claims 1 and 2 in which component B is synthesized from 90 to 75% by weight styrene, α-methyl styrene or nucleus-substituted styrenes or mixtures of the above-mentioned aromatic vinyl compounds and 10 to 25% by weight maleic anhydride.

4. Molding compounds as claimed in claims 1 to 3 containing component C in quantities of from 1.0 to 3.0 parts by weight, based on 100 parts by weight A+B.

5. Molding compounds as claimed in claims 1 to 4 in which component C is synthesized from 30 to 80 parts by weight C.1 and 70 to 20 parts by weight C.2.

6. Molding compounds as claimed in claims 1 to 5 containing at least one additive selected from the group consisting of flameproofing agents, flow promoters, stabilizers, pigments, mold release agents and antistatic agents.

7. A process for the production of the molding compounds claimed in claims 1 to 5, characterized in that components A, B and C are mixed in known manner and then melt-compounded or melt-extruded in standard units at temperatures of 200 to 330°C.

8. A process for the production of the molding compounds claimed in claims 1 to 5, characterized in that solutions of components A, B and C in suitable organic solvents are mixed and the solution mixtures are then concentrated by evaporation in standard evaporation units.

9. A process as claimed in claims 7 and 8 for the production of the molding compounds claimed in claim 6, characterized in that at least one additive from the group consisting of flameproofing agents, flow promoters, stabilizers, pigments, mold release agents and antistatic agents is incorporated.

## Revendications

1. Compositions à mouler thermoplastiques, contenant

A. 50 à 80 parties en poids, pour 100 parties en poids de A+B, de copolymère séquencé polydiorganosiloxane-polycarbonate ayant un poids moléculaire moyen $\overline{M}_p$ de 10 000 à 200 000 et une teneur en motifs structuraux carbonate aromatique entre 75 et 99% en poids et une teneur en motifs diorganosiloxy entre 25 et 1,0% en poids, les copolymères séquencés étant des copolymères à base des diphénols de formule (I)

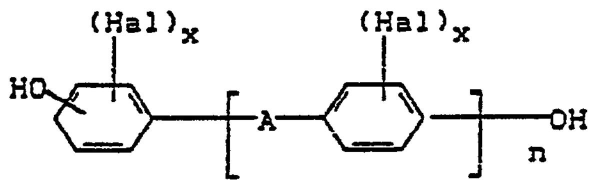
(I),

dans laquelle "A" désigne une liaison simple, un groupe alkylène en $C_1$ à $C_5$, un groupe alkylidène en $C_2$ à $C_5$, un groupe cycloalkylidène en $C_5$ ou $C_6$, –S– ou $-SO_2-$, "Hal" est le chlore ou le brome, "x" a la valeur 0, 1 ou 2 et "n" a la valeur 1 ou zéro, et de formule (Ia)

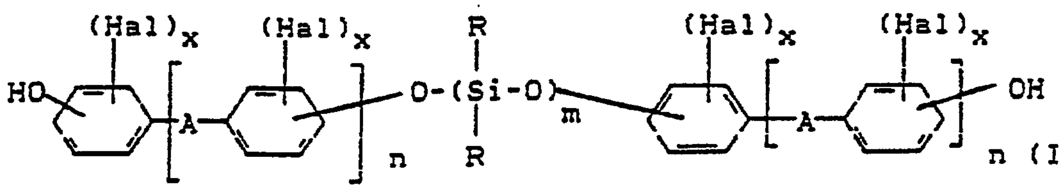
(Ia)

dans laquelle "A", "Hal", "x" et "n" ont la définition mentionnée pour la formule (I) et les groupes R sont identiques ou différents et représentent un groupe alkyle linéaire en $C_1$ à $C_{20}$, un groupe alkyle ramifié en $C_3$ à $C_{20}$ ou un groupe aryle en $C_6$ à $C_{20}$ et "m" est un nombre entier entre 5 et 100, et les copolymères séquencés sont préparés à partir des polydiorganosiloxanes (Ia) porteurs de groupes terminaux α,ω-bishydroxyaryloxy, avec un degré de polymérisation $P_n$ de 5 à 100,

B. 20 à 50 parties en poids, pour 100 parties en poids de A+B, d'un copolymérisat à structure statistique formé de 95 à 70% en poids de styrène, d'α-méthylstyrène ou de styrènes substitués sur le noyau ou de mélanges des composés vinyl-aromatiques mentionnés, et de 5 à 30% en poids d'anhydride d'acide maléique et

C. 0,5 à 4,0 parties en poids, pour 100 parties en poids de A+B, d'un ou plusieurs polymérisats greffés de

C.1 5 à 90 parties en poids d'un mélange de

C.1.1 50 à 95% en poids de styrène, d'α-méthylstyrène, de styrène substitué sur le noyau, de méthacrylate de méthyle ou leurs mélanges et

C.1.2 50 à 5% en poids de (méth)-acrylonitrile, de méthacrylate de méthyle, d'anhydride d'acide maléique, de maléimide substitué sur l'atome d'azote ou leurs mélanges, sur

C.2 95 à 10 parties en poids d'un caoutchouc de température de transition vitreuse inférieure ou égale à 10°C.

2. Compositions à mouler suivant la revendication 1, contenant comme composant (A) un mélange de copolymères séquencés polydiorganosiloxane-polycarbonate avec des polycarbonates thermoplastiques connus dépourvus de siloxane, la teneur totale en motifs diorganosiloxy de ce mélange de polycarbonates se situant là encore entre 1,0 et 25% en poids.

3. Compositions à mouleur suivant les revendications 1 et 2, dans lesquelles le composant B est formé de 90 à 75% en poids de styrène, d'α-méthylstyrène ou de styrènes substitués sur le noyau ou de mélanges des composés vinyl-aromatiques mentionnés et de 10 à 25% en poids d'anhydride d'acide maléique.

4. Compositions à mouler suivant les revendications 1 à 3, contenant le composant C en quantités de 1,0 à 3,0 parties en poids pour 100 parties en poids de A+B.

5. Compositions à mouler suivant les revendications 1 à 4, dans lesquelles le composant C est constitué de 30 à 80 parties en poids de C.1 et de 70 à 20 parties en poids de C.2.

6. Compositions à mouler suivant les revendications 1 à 5, contenant au moins un additif, choisi dans le groupe comprenant des retardateurs de flamme, des agents favorisant l'écoulement, des agents stabilisants, des pigments, des agents de démoulage et des agents antistatiques.

7. Procédé de production de compositions à mouler suivant les revendications 1 à 5, caractérisé en ce qu'on mélange les composants A, B et C d'une manière connue, puis on formule ou on extrude le mélange à l'état fondu à des températures de 220 à 330°C dans des appareils classiques.

8. Procédé de production de compositions à mouler suivant les revendications 1 à 5, caractérisé en ce qu'on mélange des solutions des composants A, B et C dans des solvants organiques appropriés, puis on concentre les mélanges de solutions dans des appareils classiques de concentration par évaporation.

9. Procédé suivant les revendications 7 et 8 pour la production des compositions à mouler suivant la revendication 6, caractérisé en ce qu'on choisit au moins un additif dans le groupe comprenant des retardateurs de flamme, des agents favorisant l'écoulement, des agents stabilisants, des pigments, des agents de démoulage et des agents antistatiques.